# EUROPEAN PATENT SPECIFICATION

(11) **EP 4 402 013 B1**
(45) Date of publication and mention of the grant of the patent: **19.02.2025**
(21) Application number: 22843950.1
(22) Date of filing: 22.11.2022
(51) Int. Cl.: B60L 53/30, B60L 53/62, B60L 53/66, B60L 53/67, B60L 58/12

(54) **CHARGING MANAGEMENT FOR ELECTRIC WORK VEHICLES**
LADEMANAGEMENT FÜR ELEKTRISCHE ARBEITSFAHRZEUGE
GESTION DE CHARGE POUR VÉHICULES DE TRAVAIL ÉLECTRIQUES

(30) Priority: 03.12.2021 GB 202117516
(43) Date of publication of application: 24.07.2024
(73) Proprietor: Caterpillar Inc., Peoria, IL 61629-9510 (US)
(72) Inventor: TWIGGER, Thomas L., Peoria, Illinois 61629-9510 (US); GAHLINGS, Steven A., Peoria, Illinois 61629-9510 (US)
(74) Representative: Novagraaf Group
(86) International application number: PCT/US2022/080305
(87) International publication number: WO 2023/102334

(56) References cited:
- EP-A2- 3 726 455
- WO-A1-2013/032519
- WO-A1-2014/033944
- WO-A1-2022/219362
- CN-A- 110 435 474
- KR-A- 20130 094 919
- US-A1- 2019 193 573
- US-A1- 2021 008 997
- US-A1- 2021 065 073
- US-A1- 2021 291 687

## Description

### Field of the invention

The invention relates to the field of electric work vehicles.

### Background

Large worksites typically have more than one charging point for electric work vehicles. The charging points may be at the same location or at different locations.

An operator of an electric work vehicle may not know the location of the charging points, particularly if the charging point locations vary between worksites or if the charging points are mobile. The operator may waste time and charge travelling to look for a charging point. An operator of an electric work vehicles may travel to a charging point in order to charge without knowledge of any properties of the charging point, and so risk not being able to charge. For example, the charging point may be in use by another vehicle, low on power or charge, out of order, the wrong type of charging point, or otherwise unusable. In the event that an electric work vehicle cannot charge at the charging point, the electric work vehicle may be required to wait or to travel to a different charging point.

EP 3726455 A2 describes a method for forecasting availability of at least one charging station for an electric vehicle. A specific charging requirement is determined for a plurality of electric vehicles. Each of the electric vehicles issues a request regarding the availability of at least one charging station depending on the specific charging requirement. A real demand for a charging process is estimated for the at least one charging station based on the requests of the electric vehicles, and from this a first probability for the availability of the at least one charging station at a future point in time is determined.

US 2019/193573 A1 describes a travelling energy distribution system that includes a plurality of supply facilities each of which is able to supply travelling energy to a vehicle. The system includes an information acquisition unit configured to acquire, from a vehicle, vehicle information relevant to an amount of travelling energy remaining in the vehicle and acquire, from each of the plurality of supply facilities, supply facility information relevant to an amount of travelling energy that can be supplied from that supply facility. The system includes a determination unit configured to determine a transfer source supply facility and a transfer destination supply facility for travelling energy to be transferred from among the plurality of supply facilities and determine an amount of the travelling energy to be transferred based on the vehicle information and the supply facility information acquired by the information acquisition unit.

WO 2014/033944 A1 describes a charging support system and method for an electric vehicle. A control center detects a specific electric vehicle that needs to be charged in order to reach a destination from a current location of the electric vehicle on the basis of prescribed electric vehicle information obtained from each electric vehicle, detects a specific charging station that is available for the specific electric vehicle on the basis of information on the specific charging station among multiple charging stations and the electric vehicle information on the specific electric vehicle, detects a specific route for navigating the specific electric vehicle to the specific charging station, and transmits specific navigation information, which includes the specific route, to the specific electric vehicle.

US 2021/008997 A1 describes a system and method for charging machines. The method includes causing, with a controller, operation of a first compaction machine at a worksite based at least in part on a worksite plan. The method also includes determining, with the controller, a return path extending from a current location of the first machine to a charging zone located at the worksite, and determining, with the controller, a return power required for the first machine to traverse the return path. The method further includes causing, with the controller, the first machine to traverse the return path, from the current location to the charging zone, based on at least one of the return power and an amount of available power stored in an energy storage device of the first machine.

WO 2022/219362 A1 describes a system and method for charging electric vehicles (EVs). A computer-based system is described for managing energy supply and demand at an EV charging facility, which charging facility may comprise a plurality of EV charge points. The system comprises a data capture module configured to receive data representative of a number of EVs, including EV charge status and EV location. An energy supply and demand processing unit determines a subgroup of the EVs and corresponding prospective customers based on said received data. An EV charge offer module is configured to issue EV charge offers for the benefit of the EV customers in the subgroup. These EV charge offers each include at least a proposed EV charge time and may also include an allocated EV charge point.

KR 2013 0094919 A describes a reservation-based charging service for electric vehicles. An electric vehicle transmits a reservation request message including the information on a current position and a battery to a reservation charge server and receives the information of a charging station from the reservation charge server. The electric vehicle transmits a reservation acceptance message to the reservation request server. The charging stations transmits the information of the charging station including the position of the charging station, sale prices, a charging schedule, and power situation of the charging station to the reservation charge server. The charging stations receive the reservation acceptance message from the reservation charge server and add the electric vehicle for reservation in the charge schedule. The reservation charge server receives and stores the information of the charging station from the charging station, receives the reservation request message from the electric vehicle, compares and analyzes the power situation of the charging station and a battery property of the electric vehicle, removes the charging station which is unsuitable for conditions, arranges the rest of the charging station by arranging the same by the distance, the sale price, and expected waiting time for charging in an ascending order, searches the optimal charging station, transmits the information of the searched charging station to the electric vehicle, and transmits the reservation acceptance message to the charging station by receiving the reservation acceptance message from the electric vehicle.

CN 110435474 A describes a charging method applied to a server. The server collects position information and working state information of multiple battery charging stations. The charging method comprises the steps of receiving a charging request of an electric vehicle; obtaining position information, power capacity information and running path information of the electric vehicle; selecting one target battery charging station from multiple target battery charging stations according to position information and working state information of the multiple target battery charging stations in a surrounding area of the electric vehicle and the position information, the power capacity information and the running path information of the electric vehicle; and transmitting the position information of the target battery charging station to the electric vehicle so that the electric vehicle runs to the target battery charging station to execute charging operation.

US 2021/065073 A1 describes a system and method for presenting electric vehicle charging options. The system and method include determining at least one charging station that is within a remaining distance that the electric vehicle is capable of travelling based on the current geo-location of the electric vehicle and the current state of charge of the battery of the electric vehicle. The system and method further include presenting a charging station map user interface that pin points the current geo-location of the electric vehicle and the at least one charging station. One or more of the charging stations are presented with labels. The system and method further include reserving the at least one charging station for charging the electric vehicle by selecting one or more particular user interface selectable geo-locations that are presented on the charging station map user interface.

WO 2013/032519 A1 describes a battery charging station and method of use. The charging station includes a plurality of charge ports and a plurality of power stages where each stage provides a portion of the station's maximum available charging power. A switching system couples the output of the power stages to the charging ports based on charging station and vehicle conditions as well as a predefined set of power distribution rules. Current charging station and vehicle conditions may include vehicle arrival time, usage fees, vehicle/customer priority information, SOC, and intended departure time. The method includes the steps of monitoring and determining battery charging station conditions, determining power distribution for the battery charging station and the charging ports in response to the current charging conditions and in accordance with a predefined set of power distribution rules, and coupling the power stages to the charging ports in accordance with the power distribution.

### Summary of the invention

A method of charging management for electric work vehicles according to the invention and a

charging management device for electric work vehicles according to the invention are both defined by the appended claims.

### Brief description of the drawings

A specific embodiment of the invention will now be described, by way of example only, with reference to the accompanying drawings in which:
Figure 1 shows a schematic diagram of an electric work vehicle communicating with a charging module according to an embodiment of the present invention.
Figure 2 shows a schematic diagram of an electric work vehicle communicating with a charging module via a central controller according to an embodiment of the present invention.

### Detailed description

Electric work vehicles commonly operate off road at work sites, for example on construction sites or at mining sites. The plurality of electric work vehicles at the work site will need to be charged. In order to efficiently charge the electric work vehicles, the electric work vehicle and charging module need to communicate. For example, communicating a status of a charging module to an electric work vehicle prevents the electric work vehicle wasting time and charge travelling to a charging module that is in use by another electric work vehicle, that is low on power or charge, or that is otherwise unusable. Communicating the location of the charging modules, which may differ between work sites or even over time in the same work site, means that the electric work vehicles can travel efficiently to the charging module. Similarly, communicating properties of the electric work vehicles to the charging modules allows efficient charging of the electric work vehicles, for example by ensuring that the electric work vehicle travels to a charging module that can provide at least the amount of charge required by the electric work vehicle.

Recharging an electric work vehicle can be time consuming, and queues may form at charging modules. Communication between the charging module and the electric work vehicle allows the electric work vehicle to travel to a charging module that is or that soon will be available.

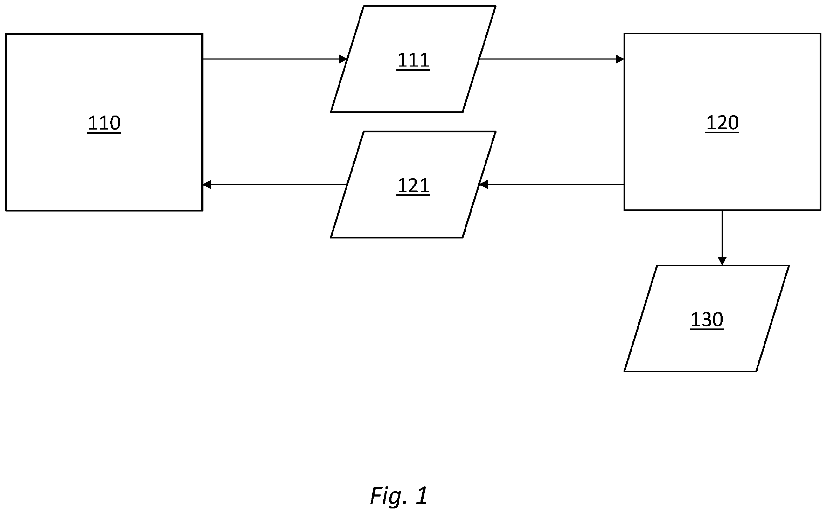

With reference to Figure 1, a method of charging management for electric work vehicles comprises communicating charger properties 111 from a charging module 110 to an electric work vehicle 120 and communicating vehicle properties 121 from the electric work vehicle 120 to the charging module 110. Charging information 130 is provided to an operator. The charging information 130 is based on the charger properties 111 and the vehicle properties 121. The charger properties 111 comprise a location of the charging module 110 and an availability of the charging module 110. The vehicle properties comprise a current state of charge of a battery of the electric work vehicle and a capacity of the battery of the electric work vehicle.

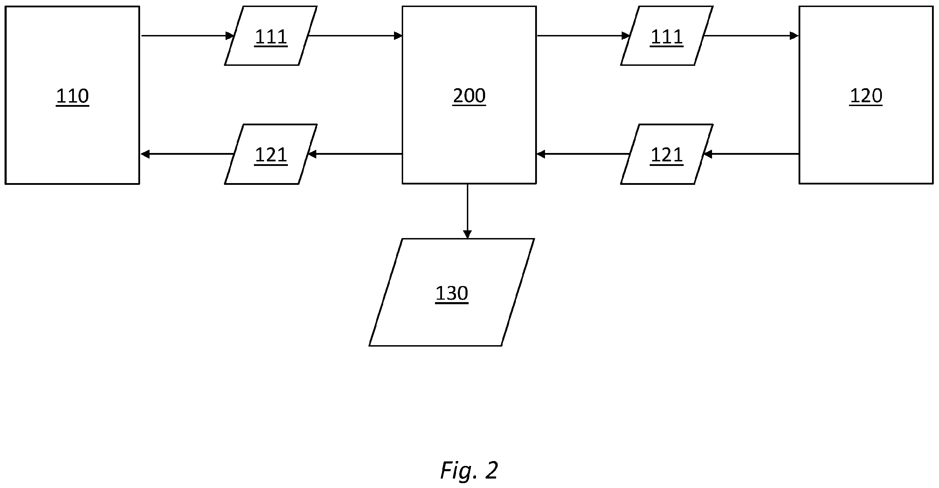

Communicating charger properties 111 to the electric work vehicle 120 and communicating vehicle properties 121 to the charging module 110 may occur at the same time, or sequentially in either order. The charger properties 111 and vehicle properties 121 may be communicated continuously or at regular intervals. The charger properties 111 and vehicle properties 121 may alternatively be communicated on demand, for example in response to a request by an operator. The charger properties 111 and vehicle properties 121 may be communicated directly between the charging module 110 and the electric work vehicle 120. With reference to Figure 2, the charger properties 111 and vehicle properties 121 may be communicated between the charging module 110 and the electric work vehicle 120 via a central controller 200. The central controller may provide the charging information 130.

The charging module 110 and the electric work vehicle 120 may each comprise a telematics module. The telematics modules may be configured to send and receive the charger properties 111 and the vehicle properties 121.

The electric work vehicle 120 may communicate vehicle properties 121 to and receive charger properties 11 from more than one charging module 110. The charging module 110 may communicate charger properties 111 to and receive vehicle properties 121 from more than one electric work vehicle 120.

The charging module may comprise a mains supply, or may not be connected to the mains supply. The charging module may comprise a power pack. The charger may comprise a generator.

The charger properties 111 may further include a health status of the charger. For example, whether the charger is working, and whether there is any damage to the charger or limited capability of the charger. The charger properties 111 may further comprise a charging capacity of the charger. For example, in the event that the charger is not connected to the mains supply, it may have a limited amount of charge available. The charging capacity may comprise a state of charge of power pack. In an embodiment, the charging capacity may comprise either an indication that the charger has sufficient charge to fully charge the battery, or an indication of the predicted state of charge of the battery after fully draining the charger. The charger properties 111 may further comprise a charging rate of the charger, and a charger connection type (such as DC, AC, three phase).

The charger properties 111 comprise an availability of the charging module 110. The availability of the charging module 110 may comprise an indication of whether the charger is in use and a reservation status of the charger. For example, the charger may be currently in use, currently free, reserved for use at a certain time by another vehicle, or unreserved. In an event that the charger is in use, the availability of the charging module 110 may further comprise a predicted charging end time at which the charger will be available. Similarly, in an event that the charger is reserved, the availability of the charging module 110 may further comprise a period when the charger is free prior to the reservation and/or a predicted end time of the reservation.

The predicted charging end time may be communicated from the charger to the electric work vehicle 120. The predicted charging end time may be calculated by the electric work vehicle 120 or central controller based on a current state of charge of the battery being charged, a target state of charge of the battery being charged, and a charging rate of the charger. In an event that the charger is not connected to the mains supply, the charger properties 111 may further comprise a predicted state of charge of the charger at the predicted charging end time.

In an embodiment, the charger may comprise a DC charger and the charger properties may further comprise a DC voltage of the charger.

The vehicle properties 121 may further comprise a predicted time before charging is required. The predicted time may be based on at least one of a current state of charge, a discharge rate, and a distance from the charger. The discharge rate may be based on a current discharge rate. The discharge rate may be based on data from previous discharging of the battery, for example data comprising discharge rates at different states of charge, or discharge rates for the operator, or discharge rates for performing various tasks with the vehicle. The distance from the charger may be used to calculate the state of charge required to travel to the charger, and therefore the minimum state of charge that the vehicle can reach before needing to travel to the charger.

The vehicle properties 121 may further comprise an available time period for charging. The available time may be based on a return-to-work time for the electric work vehicle 120. For example, the electric work vehicle 120 may be charged at the end of an operator's shift, and the return-to-work time may comprise the beginning of the next shift for the electric work vehicle 120 (for the same or a different operator). Otherwise, an available time period may comprise a lunch break of the operator, a weekend, a closed period of the worksite, or other time period.

The vehicle properties 121 may further comprise a target state of charge for charging the battery. For example, the target state of charge may be to fully charge the battery to a 100% state of charge. The target state of charge may comprise a state of charge that has been determined to be appropriate to maintain good battery health. The target state of charge may be the state of charge required to complete the next task or the next shift.

The vehicle properties 121 may further comprise at least one of a battery voltage, a maximum charge rate of the battery, a state of health of the battery, and a temperature of the battery.

The charging module 110 may comprise a geofence. The geofence may define a perimeter around the charging module 110, for example based on a radius from the charging module 110. Within the geofence, a speed of the electric work vehicle 120 may be limited to below a threshold speed, and/or the electric work vehicle 120 may be limited in the tasks it can perform. There may be other limitations, such as the number of electric work vehicles permitted to be within the geofence at any one time. The charger properties may further comprise the geofence and any limitations on the electric work vehicle 120 that occur within the geofence.

In an embodiment, the charging information 130 provided to the operator may comprise information to allow the operator to make an informed charging decision. For example, the charging information 130 may comprise the predicted time before charging is required and distances to available charging modules. In another embodiment, the charging information 130 provided to the operator may comprise a result of a charging decision made by a controller (either the central controller or a controller of the electric work vehicle). For example, the controller may decide which charging module 110 the electric work vehicle 120 should travel to, and when the electric work vehicle 120 should travel to or arrive at the charging module.

The method may further comprise making a reservation of the charging module 110. The reservation may be made by the operator based on the charging information 130. The reservation may be suggested to the operator by a controller based on a charging decision made by the controller, and the operator may confirm or reject the reservation. The reservation may be made by a controller based on a charging decision made by the controller, without input from the operator.

The method of charging management may comprise communicating charger properties 111 from a plurality of charging modules 110 to an electric work vehicle 120. The charging information 130 may be based on the charger properties 111 for the plurality of charging modules 110, such that the charging decision (made by the operator or a controller) comprises a decision of whether or when to charge the electric work vehicle, and which charging module to use.

The charging information 130 may be provided to the operator via a display in the electric work vehicle cab, via a smartphone, or by other means.

According to an embodiment, there is a charging management device for electric work vehicles. The charging management device is configured to communicate charger properties 111 from a charging module 110 to an electric work vehicle and communicate vehicle properties 121 from the electric work vehicle 120 to the charging module 110. The charging management device is further configured to provide charging information 130 to an operator, wherein the charging information 130 is based on the charger properties 111 and the vehicle properties 121. The charger properties 111 comprise location of the charging module 110 and an availability of the charging module 110. The vehicle properties 121 comprise a current state of charge of a battery of the electric work vehicle 120 and a capacity of the battery of the electric work vehicle 110.

The charging management device may be configured to carry out any of the methods described above. The charging management device may comprise a controller (either a central controller or a controller on the electric work vehicle 120). The charging management device may comprise a telematics device on the charging module 110, and a telematics device on the electric work vehicle 120.

## Claims

1. A method of charge management for electric work vehicles, the method comprising:
communicating charger properties (111) from a charging module (110) to an electric work vehicle (120);
communicating vehicle properties (121) from the electric work vehicle (120) to the charging module (110); and
providing charging information (130) to an operator, wherein the charging information (130) is based on the charger properties (111) and the vehicle properties (121);
wherein the charger properties (111) comprise:
a location of the charging module (110); and
an availability of the charging module (110); and
wherein the vehicle properties (121) comprise:
a current state of charge of a battery of the electric work vehicle (120);
a capacity of the battery of the electric work vehicle (120); and
an available time period for charging based on a return-to-work time of the electric work vehicle (120);
**characterised in that** the vehicle properties further comprise:
a predicted time before charging is required, wherein the predicted time is based on data from previous discharging of the battery of the electric work vehicle (120) comprising one or more of:
discharge rates at different states of charge;
discharge rates for the operator; and
discharge rates for performing various tasks with the electric work vehicle (120).

2. The method of claim 1 wherein the charger properties (111) further comprise one or more of:
a health status of the charging module (110);
a charging capacity of the charging module (110);
a charging rate; and
a charging module connection type.

3. The method of claim 1 or 2 wherein the availability of the charging module comprises at least one of:
an indication of whether the charging module (110) is in use; and
a reservation status of the charging module (110).

4. The method of claim 3 wherein in the event that the charging module (110) is in use, the availability of the charging module (110) comprises a predicted charging end time.

5. The method of claim 4 wherein the predicted charging end time is either:
communicated from the charging module (110) to the electric work vehicle (120); or
calculated by the electric work vehicle (120) based on a current state of charge of the battery being charged, a target state of charge of the battery being charged, and a charging rate of the charging module (110).

6. The method of any preceding claim wherein the charging module (110) comprises a DC charger and wherein the charger properties further comprise a DC voltage.

7. The method of any preceding claim, wherein the vehicle properties (121) further comprise at least one of:
a predicted time before charging is required;
an available time period for charging; and
a target state of charge for charging.

8. The method of any preceding claim, wherein the vehicle properties (121) further comprise at least one of:
a battery voltage;
a maximum charge rate of the battery;
a state of health of the battery; and
a temperature of the battery.

9. The method of any preceding claim wherein communicating charger properties (111) and communicating vehicle properties (121) is via a separate controller.

10. The method of any preceding claim wherein the charging module (110) and the electric work vehicle (120) each comprise a telematics module.

11. The method of any preceding claim wherein the charger properties (111) further comprise a radius around the charging module (110) in which a speed of the electric work vehicle (120) is limited to below a threshold speed.

12. The method of any preceding claim wherein the charging information (111) comprises a result of a charging decision made by a controller.

13. The method of any preceding claim further comprising making a reservation of the charging module (110).

14. A charge management device for electric work vehicles, the charge management device configured to:
communicate charger properties (111) from a charging module (110) to an electric work vehicle (120);
communicate vehicle properties (121) from the electric work vehicle (120) to the charging module (110); and
provide charging information (130) to an operator, wherein the charging information (130) is based on the charger properties (111) and the vehicle properties (121);
wherein the charger properties (111) comprise:
a location of the charging module (110); and
an availability of the charging module (120); and
wherein the vehicle properties (121) comprise:
a current state of charge of a battery of the electric work vehicle (120);
a capacity of the battery of the electric work vehicle (120); and
an available time period for charging based on a return-to-work time of the electric work vehicle (120);
**characterised in that** the vehicle properties further comprise:
a predicted time before charging is required, wherein the predicted time is based on data from previous discharging of the battery of the electric work vehicle (120) comprising one or more of:
discharge rates at different states of charge;
discharge rates for the operator; and
discharge rates for performing various tasks with the electric work vehicle (120).

15. The charge management device of claim 14 wherein the charger properties (111) further comprise one or more of:
a health status of the charging module (110);
a charging capacity of the charging module (110);
a charging rate; and
a charging module connection type.

## Patentansprüche

1. Verfahren für eine Ladeverwaltung für Elektroarbeitsfahrzeuge, das Verfahren umfassend: Übermitteln von Ladegeräteigenschaften (111) von einem Lademodul (110) an ein Elektroarbeitsfahrzeug (120);
Übermitteln von Fahrzeugeigenschaften (121) von dem Elektroarbeitsfahrzeug (120) an das Lademodul (110); und Bereitstellen von Ladeinformationen (130) für einen Betreiber, wobei die Ladeinformationen (130) auf den Ladegeräteigenschaften (111) und den Fahrzeugeigenschaften (121) basieren;
wobei die Ladegeräteigenschaften (111) umfassen:
einen Standort des Lademoduls (110); und
eine Verfügbarkeit des Lademoduls (110); und
wobei die Fahrzeugeigenschaften (121) umfassen:
einen aktuellen Ladezustand einer Batterie des Elektroarbeitsfahrzeugs (120);
eine Kapazität der Batterie des Elektroarbeitsfahrzeugs (120); und
eine verfügbare Zeitperiode zum Aufladen basierend auf einer Rückkehrzeit des Elektroarbeitsfahrzeugs (120);
**dadurch gekennzeichnet, dass** die Fahrzeugeigenschaften ferner umfassen:
eine vorhergesagte Zeit, bevor ein Laden erforderlich ist, wobei die vorhergesagte Zeit auf Daten aus vorherigen Entladungen der Batterie des Elektroarbeitsfahrzeugs (120) basiert, umfassend eines oder mehrere von:
Entladeraten bei unterschiedlichen Ladezuständen;
Entladeraten für den Betreiber; und
Entladeraten zum Durchführen verschiedener Aufgaben mit dem Elektroarbeitsfahrzeug (120).

2. Verfahren nach Anspruch 1, wobei die Ladegeräteigenschaften (111) ferner eines oder mehr umfassen von:
einem Gesundheitsstatus des Lademoduls (110);
einer Ladekapazität des Lademoduls (110);
einer Laderate; und
einem Lademodulanschlusstyp.

3. Verfahren nach Anspruch 1 oder 2, wobei die Verfügbarkeit des Lademoduls mindestens eines umfasst von:
einer Angabe, ob das Lademodul (110) in Verwendung ist; und einem Reservierungsstatus des Lademoduls (110).

4. Verfahren nach Anspruch 3, wobei für den Fall, dass das Lademodul (110) in Gebrauch ist, die Verfügbarkeit des Lademoduls (110) eine vorhergesagte Ladeendzeit umfasst.

5. Verfahren nach Anspruch 4, wobei die vorhergesagte Ladeendzeit entweder: von dem Lademodul (110) an das Elektroarbeitsfahrzeug (120) übermittelt wird; oder durch das Elektroarbeitsfahrzeug (120) basierend auf einem aktuellen Ladezustand der Batterie, die geladen wird, einem Zielladezustand der Batterie, die geladen wird, und einer Laderate des Lademoduls (110) berechnet wird.

6. Verfahren nach einem der vorstehenden Ansprüche, wobei das Lademodul (110) ein Gleichstromladegerät umfasst, und wobei die Ladegeräteigenschaften ferner eine Gleichspannung umfassen.

7. Verfahren nach einem der vorstehenden Ansprüche, wobei die Fahrzeugeigenschaften (121) ferner mindestens eines umfassen von:
einer vorhergesagten Zeit, bevor das Laden erforderlich ist;
einer verfügbaren Zeitperiode zum Laden; und einem Zielladezustand zum Laden.

8. Verfahren nach einem der vorstehenden Ansprüche, wobei die Fahrzeugeigenschaften (121) ferner mindestens eines umfassen von:
einer Batteriespannung;
einer maximalen Laderate der Batterie;
einem Gesundheitszustand der Batterie; und einer Temperatur der Batterie.

9. Verfahren nach einem der vorstehenden Ansprüche, wobei das Übermitteln der Ladegeräteigenschaften (111) und das Übermitteln der Fahrzeugeigenschaften (121) über eine separate Steuerung erfolgt.

10. Verfahren nach einem der vorstehenden Ansprüche, wobei das Lademodul (110) und das Elektroarbeitsfahrzeug (120) jeweils ein Telematikmodul umfassen.

11. Verfahren nach einem der vorstehenden Ansprüche, wobei die Ladegeräteigenschaften (111) ferner einen Radius um das Lademodul (110) herum umfassen, in dem eine Geschwindigkeit des Elektroarbeitsfahrzeugs (120) auf unter eine Schwellengeschwindigkeit begrenzt ist.

12. Verfahren nach einem der vorstehenden Ansprüche, wobei die Ladeinformationen (111) ein Ergebnis einer Ladeentscheidung, die durch einen Steuerung getroffen wird, umfassen.

13. Verfahren nach einem der vorstehenden Ansprüche, ferner umfassend ein Vornehmen einer Reservierung des Lademoduls (110).

14. Ladeverwaltungsvorrichtung für Elektroarbeitsfahrzeuge, wobei die Ladeverwaltungsvorrichtung konfiguriert ist zum:
Übermitteln von Ladegeräteigenschaften (111) von einem Lademodul (110) an ein Elektroarbeitsfahrzeug (120);
Übermitteln von Fahrzeugeigenschaften (121) von dem Elektroarbeitsfahrzeug (120) an das Lademodul (110); und
Bereitstellen von Ladeinformationen (130) für einen Betreiber, wobei die Ladeinformationen (130) auf den Ladegeräteigenschaften (111) und den Fahrzeugeigenschaften (121) basieren;
wobei die Ladegeräteigenschaften (111) umfassen:
einen Standort des Lademoduls (110); und
eine Verfügbarkeit des Lademoduls (120); und
wobei die Fahrzeugeigenschaften (121) umfassen:
einen aktuellen Ladezustand einer Batterie des Elektroarbeitsfahrzeugs (120);
eine Kapazität der Batterie des Elektroarbeitsfahrzeugs (120); und
eine verfügbare Zeitperiode zum Aufladen basierend auf einer Rückkehrzeit des Elektroarbeitsfahrzeugs (120);
**dadurch gekennzeichnet, dass** die Fahrzeugeigenschaften ferner umfassen:
eine vorhergesagte Zeit, bevor ein Laden erforderlich ist, wobei die vorhergesagte Zeit auf Daten aus vorherigen Entladungen der Batterie des Elektroarbeitsfahrzeugs (120) basiert, umfassend eines oder mehrere von:
Entladeraten bei unterschiedlichen Ladezuständen;
Entladeraten für den Betreiber; und
Entladeraten zum Durchführen verschiedener Aufgaben mit dem Elektroarbeitsfahrzeug (120).

15. Ladeverwaltungsvorrichtung nach Anspruch 14, wobei die Ladegeräteigenschaften (111) ferner mindestens eines umfassen von:
einem Gesundheitsstatus des Lademoduls (110);
einer Ladekapazität des Lademoduls (110);
einer Laderate; und
einem Lademodulanschlusstyp.

## Revendications

1. Procédé de gestion de charge pour les véhicules de travail électriques, le procédé comprenant : la communication de propriétés de chargeur (111) d'un module de charge (110) à un véhicule de travail électrique (120) ;
la communication de propriétés de véhicule (121) du véhicule de travail électrique (120) au module de charge (110) ; et la fourniture d'informations de charge (130) à un opérateur, dans lequel les informations de charge (130) sont basées sur les propriétés de chargeur (111) et les propriétés de véhicule (121) ;
dans lequel les propriétés de chargeur (111) comprennent :
une position du module de charge (110) ; et
une disponibilité du module de charge (110) ; et
dans lequel les propriétés de véhicule (121) comprennent :
un état de charge actuel d'une batterie du véhicule de travail électrique (120) ;
une capacité de la batterie du véhicule de travail électrique (120) ; et
une période de temps disponible pour la charge en fonction d'une heure de retour au travail du véhicule de travail électrique (120) ;
**caractérisé en ce que** les propriétés de véhicule comprennent en outre :
un moment prédit avant que la charge ne soit requise, dans lequel le moment est basé sur les données d'une décharge précédente de la batterie du véhicule de travail électrique (120) comprenant au moins l'un parmi :
des régimes de décharge à différents états de charge ;
des régimes de décharge pour l'opérateur ; et
des régimes de décharge pour l'exécution de diverses tâches au moyen du véhicule de travail électrique (120).

2. Procédé selon la revendication 1, dans lequel les propriétés de chargeur (111) comprennent en outre au moins l'un parmi :
un état de santé du module de charge (110) ;
une capacité de charge du module de charge (110) ;
un régime de charge ; et
un type de connexion du module de charge.

3. Procédé selon la revendication 1 ou 2, dans lequel la disponibilité du module de charge comprend au moins l'un parmi :
une indication du fait de savoir si le module de charge (110) est en cours d'utilisation ; et un état de réservation du module de charge (110).

4. Procédé selon la revendication 3 dans lequel, dans le cas où le module de charge (110) est en cours d'utilisation, la disponibilité du module de charge (110) comprend un temps de fin de charge prédit.

5. Procédé selon la revendication 4, dans lequel le temps de fin de charge prédit est soit : communiqué par le module de charge (110) au véhicule de travail électrique (120) ; soit calculé par le véhicule de travail électrique (120) en fonction d'un état de charge actuel de la batterie en cours de charge, d'un état de charge cible de la batterie en cours de charge et d'un régime de charge du module de charge (110).

6. Procédé selon l'une quelconque des revendications précédentes, dans lequel le module de charge (110) comprend un chargeur CC et dans lequel les propriétés de chargeur comprennent en outre une tension CC.

7. Procédé selon l'une quelconque des revendications précédentes, dans lequel les propriétés de véhicule (121) comprennent en outre au moins l'un parmi :
un moment prédit avant que la charge ne soit requise ;
une période de temps disponible pour la charge ; et un état de charge cible pour la charge.

8. Procédé selon l'une quelconque des revendications précédentes, dans lequel les propriétés de véhicule (121) comprennent en outre au moins l'un parmi :
une tension de la batterie ;
un régime de charge maximal de la batterie ;
un état de santé de la batterie ; et une température de la batterie.

9. Procédé selon l'une quelconque des revendications précédentes, dans lequel la communication des propriétés de chargeur (111) et la communication des propriétés de véhicule (121) s'effectuent par le biais d'un dispositif de commande distinct.

10. Procédé selon l'une quelconque des revendications précédentes, dans lequel le module de charge (110) et le véhicule de travail électrique (120) comprennent chacun un module télématique.

11. Procédé selon l'une quelconque des revendications précédentes, dans lequel les propriétés de chargeur (111) comprennent en outre un rayon autour du module de charge (110), rayon dans lequel la vitesse du véhicule de travail électrique (120) est limitée à une valeur en dessous d'une vitesse seuil.

12. Procédé selon l'une quelconque des revendications précédentes, dans lequel les informations de charge (111) comprennent un résultat d'une décision de charge prise par un dispositif de commande.

13. Procédé selon l'une quelconque des revendications précédentes, comprenant en outre la réservation du module de charge (110).

14. Dispositif de gestion de charge pour les véhicules de travail électriques, le dispositif de gestion de charge étant conçu pour :
communiquer les propriétés de chargeur (111) d'un module de charge (110) à un véhicule de travail électrique (120) ;
communiquer les propriétés de véhicule (121) du véhicule de travail électrique (120) au module de charge (110) ; et
fournir des informations de charge (130) à un opérateur, dans lequel les informations de charge (130) sont basées sur les propriétés de chargeur (111) et les propriétés de véhicule (121) ;
dans lequel les propriétés de chargeur (111) comprennent :
une position du module de charge (110) ; et
une disponibilité du module de charge (120) ; et
dans lequel les propriétés de véhicule (121) comprennent :
un état de charge actuel d'une batterie du véhicule de travail électrique (120) ;
une capacité de la batterie du véhicule de travail électrique (120) ; et
une période de temps disponible pour la charge en fonction d'une heure de retour au travail du véhicule de travail électrique (120) ;
**caractérisé en ce que** les propriétés de véhicule comprennent en outre :
un moment prédit avant que la charge ne soit requise, dans lequel le moment est basé sur les données d'une décharge précédente de la batterie du véhicule de travail électrique (120) comprenant au moins l'un parmi :
des régimes de décharge à différents états de charge ;
des régimes de décharge pour l'opérateur ; et
des régimes de décharge pour l'exécution de diverses tâches au moyen du véhicule de travail électrique (120).

15. Dispositif de gestion de charge selon la revendication 14, dans lequel les propriétés de chargeur (111) comprennent en outre au moins l'un parmi :
un état de santé du module de charge (110) ;
une capacité de charge du module de charge (110) ;
un régime de charge ; et
un type de connexion du module de charge.
